# EUROPÄISCHE PATENTSCHRIFT

(11) **EP 2 047 070 B1**
(45) Veröffentlichungstag und Bekanntmachung des Hinweises auf die Patenterteilung: **24.10.2012**
(21) Anmeldenummer: 07788260.3
(22) Anmeldetag: 06.08.2007
(51) Int. Cl.: F01D 25/04, F02C 6/12

(54) **PARTIKELVIBRATIONSDÄMPFER**
PARTICLE VIBRATION DAMPER
AMORTISSEUR DE VIBRATIONS A PARTICULES

(30) Priorität: 04.08.2006 EP 06405333
(43) Veröffentlichungstag der Anmeldung: 15.04.2009
(73) Patentinhaber: ABB Turbo Systems AG, 5400 Baden (CH)
(72) Erfinder: BÄTTIG, Josef, 5704 Egliswil (CH); ROHNE, Karl-Heinz, 5234 Villigen (CH); TRÖNDLE, Alfons, 79804 Dogern (DE)
(74) Vertreter: Zimmermann, Gilbert
(86) Internationale Anmeldenummer: PCT/EP2007/058149
(87) Internationale Veröffentlichungsnummer: WO 2008/015291

(56) Entgegenhaltungen:
- EP-A- 1 602 803
- EP-A2- 1 098 069
- EP-A2- 1 422 401
- WO-A2-99/48951
- US-A- 4 453 887

## Beschreibung

### Technisches Gebiet

Die Erfindung bezieht sich auf das Gebiet der Abgasturbolader für aufgeladene Brennkraftmaschinen.

Sie betrifft einen Abgasturbolader mit einem Partikelvibrationsdämpfer.

### Stand der Technik

Abgasturbolader zur Aufladung von Verbrennungsmotoren weisen in den meisten Fällen beim Verdichtereintritt einen Filterschalldämpfer auf. Diese schalldämpfer mit aufgesetztem Filter werden vorzugsweise mittels eines Befestigungsflanschs starr mit dem Verdichtergehäuse verbunden.

Der Abgasturbolader wird entweder direkt oder mittels einem speziellen Fuss auf der Motorkonsole befestigt. In den meisten Fällen ist die axiale Distanz zwischen Fuss und Schalldämpfer sehr gross. Durch Motorvibrationen kann der Schalldämpfer zu unzulässig grossen Schwingungen angeregt werden. Dies insbesondere dann, wenn die Eigenfrequenz des Schalldämpfers nur unwesentlich über jenen der Turboladerbefestigungen liegt. In diesem Fall treten beim Schalldämpfer unzulässige Schwingungsüberhöhungen auf.

Eine Möglichkeit, solche Schwingungsüberhöhungen zu vermeiden, ist in der DE 103 60 770 offenbart. Der Schalldämpfer ist dabei in einem ersten Verbindungsbereich starr am Verdichtergehäuse befestigt und liegt in einem zweiten Verbindungsbereich mit einer Auflagefläche auf einer Auflagefläche am Verdichtergehäuse auf, wobei der Schalldämpfer durch die Auflage im zweiten Verbindungsbereich gegenüber der starren Befestigung im ersten Verbindungsbereich mit einer Vorspannung beaufschlagt ist. Durch die Vorspannung wird die Eigenfrequenz des Schalldämpfers angehoben womit unzulässige Schwingungsüberhöhungen des Schalldämpfers verhindern werden können.

EP 1 098 069 B1 offenbart einen granulatgefüllten Schwingungsdämpfer für den Bauteil eines Verbrennungssystem eines Gasturbinentriebwerks oder eines Bauteil bei einer spanabhebenden Bearbeitung.

Ein Abgasturbolader gemäß dem Stand der Tecknik ist aus EP 1 602 803 bekannt.

### Kurze Darstellung der Erfindung

Die Aufgabe der vorliegenden Erfindung besteht darin, einen Abgasturbolader derart zu verbessern, dass unzulässige Schwingungsüberhöhungen unterdrückt werden können.

Erfindungsgemäss wird diese Aufgabe durch einen Abgasturbolader gemäß Anspruch 1 gelöst.

Ein mit losen Partikeln befüllter Hohlkörper weist unter Schwingbeanspruchung ein ausgezeichnetes Dämpfungsvermögen auf. Dabei wird die Vibrationsenergie durch die inneren Reibungskräfte der Partikel verteilt und es kommt so eine Dämpfung der Schwingungen zustande.

Bei einem Turbolader entstehen konstruktionsbedingt zahlreiche Hohlräume. Diese Hohlräume können als Behälter zur Aufnahme der erwähnten Partikeln genutzt werden. Dadurch kann einerseits ein kostengünstiger Dämpfer realisiert werden, welcher zudem auch ästhetisch zu befriedigen vermag.

Diese Hohlräume im Gehäuse des Abgasturboladers sind im wesentlichen ringförmig ausgebildet und konzentrisch zur Achse des Abgasturboladers angeordnet. Mit ringförmig ist auch ein unterteilter Hohlraum gemeint, welcher aus mehren ringsegmentförmigen Hohlräumen zusammengesetzt ist, oder aber vieleckige oder ovale Ringhohlräume, bzw. entsprechende Ringsegmente, welche um die Achse des Abgasturboladers angeordnet sind.

Die Befüllung mit Partikeln bringt zudem noch Vorteile bezüglich zusätzlicher Containmentsicherheit beim allfälligen Bersten des Verdichterrades sowie Lärmdämmung.

Die Partikel sind optional im wesentlichen kugelförmig oder sphärisch ausgebildet, d.h. sie weisen insbesondere keine ausgeprägten Ecken und Kanten auf, an welchen sich die einzelnen Partikel gegenseitig verhaken und verkanten könnten. Dies lässt eine reibungsbehaftete innere Bewegung der Partikelmasse zu, welche zur Dämpfung der Schwingungen beiträgt.

Weitere Vorteile ergeben sich aus den abhängigen Ansprüchen.

### Kurze Beschreibung der Zeichnungen

Folgend sind anhand der Zeichnungen Ausführungsformen des Abgasturboladers mit erfindungsgemäss mit Partikeln gefüllten Hohlräumen beschrieben. Hierbei zeigt
- Fig. 1: eine Ausführungsform mit einem mit Partikeln gefüllten Hohlraum seitlich am Verdichtergehäuse gegen den Filterschalldämpfer, integriert im Austrittsgehäuse des Verdichters,
- Fig. 2: eine Ausführungsform mit einem mit Partikeln gefüllten Hohlraum seitlich am Verdichtergehäuse gegen den Filterschalldämpfer, integriert ein einem separaten Gehäuseeinsatz des Verdichters,
- Fig. 3: eine Ausführungsform mit einem mit Partikeln gefüllten Hohlraum seitlich am Filterschalldämpfer gegen das Verdichtergehäuse,
- Fig. 4: eine Ausführungsform mit einem mit Partikeln gefüllten Hohlraum seitlich zwischen Filterschalldämpfer und Verdichtergehäuse,
- Fig. 5: eine Ausführungsform mit einem mit Partikeln gefüllten Hohlraum radial aussen am Verdichtergehäuse, und
- Fig. 6: die Ausführungsform gemäss Fig. 3 mit einem separaten, mit Partikeln gefüllten Hohlraum seitlich am Filterschalldämpfer.

### Weg zur Ausführung der Erfindung

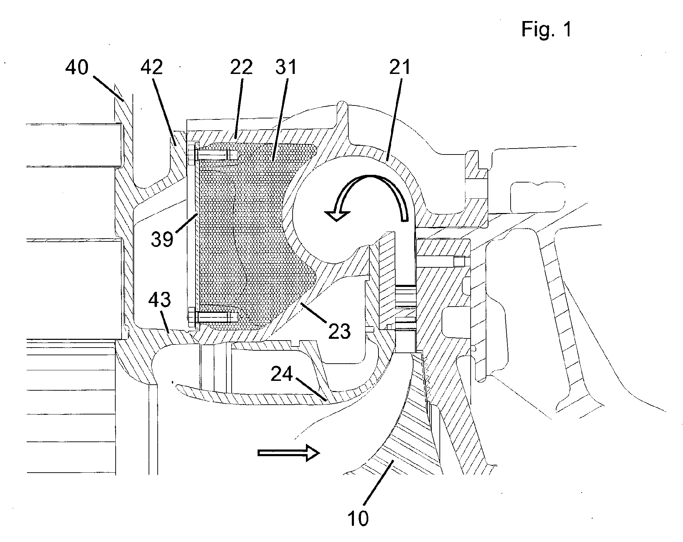

Fig. 1 zeigt die Verdichterseite eines Abgasturboladers. Das Verdichterrad 10 ist drehbar gelagert und von einem Verdichtergehäuse umgeben. Der Strömungsweg des zu verdichtenden Mediums ist mit den Pfeilen angedeutet. Das Verdichtergehäuse umfasst in der dargestellten Ausführungsform zwei integral mit dem Austrittsgehäuse 21 ausgebildete Flansche 22 und 23 zur Befestigung des Filterschalldämpfers 40 an dem Verdichtergehäuse. Hierfür umfasst der Filterschalldämpfer ebenfalls zwei Flanschen 42 und 43. Radial innerhalb der beiden Befestigungsflansche 22 und 23 umfasst das Verdichtergehäuse eine Einsatzwand 24, welche im Bereich des Verdichterrades den Strömungskanal des zu verdichtenden Mediums begrenzt.

Erfindungsgemäss ist der sich zwischen dem radial äusseren Flansch 22 und dem radial inneren Flansch 23 erstreckende Hohlraum 31 zum Dämpfen von Schwingungen am Abgasturbolader mit Partikeln gefüllt. Der Hohlraum 31 ist mit einem Hohlraumverschluss 39 verschlossen. In der dargestellten Ausführungsform ist der Hohlraumverschluss eine Platte, welche mittels Schrauben über der Öffnung zwischen den beiden Flanschen 22 und 23 festgeschraubt ist. Diese Öffnung kann sich über einen Teil oder über den gesamten Umfang erstrecken. Ist nur ein Teil entlang des Umfangs geöffnet, ergeben sich Vorteile beim Einfüllen und Verschliessen, ist der gesamte Umfang geöffnet, ergeben sich insbesondere Vorteile beim leeren des Hohlraums.

Der Begriff Partikel bezeichnet dabei eine Ansammlung von Partikeln, die im Verhältnis zur Gesamtmenge klein und von in etwa gleicher Korngrösse sind. Die Partikelmasse kann sich nach Überschreiten einer Aktivierungsenergie als Fluid verhalten, also fliessen. Die Partikel bleiben dabei im wesentlichen erhalten, bzw. verändern ihre Form nicht. Somit können die Partikel durch die unverschlossene Öffnung in das Innere des Hohlraums gegossen werden, bevor anschliessend mit dem Hohlraumverschluss der Hohlraum abgedichtet wird.

Der Hohlraum kann vollständig oder nur teilweise mit Partikeln gefüllt sein. Bleibt ein Teil des Hohlraums frei von Partikeln, ermöglicht dies ein gewisser Fluss der einzelnen Partikeln. Ist dies nicht erwünscht, ist der Hohlraum vollständig zu füllen. Der Hohlraum kann mittels Rippen unterteilt sein. Dies hat den Vorteil, dass bei teilweiser Füllung des in mehrere Teile unterteilten Hohlraums eine gleichmässige Verteilung der Partikel über den Umfang gewährleistet bleibt.

Zur Verstärkung der Dämpfungswirkung können den Partikeln Gummigranulat oder Gummimehl beigemischt werden, oder die Partikel können zusammen mit einer Flüssigkeit, vorzugsweise einer dämpfenden Flüssigkeit in den Hohlraum eingefüllt werden. Zur Verhinderung von Verschleiss an den Wänden des Hohlraums, sind die Gehäusewände an der Innenseite des Hohlraums gehärtet oder aufgummiert. Eine Aufgummierung der Gehäusewände im Innern des Hohlraums führt auch zu einer Verbesserung der Dämpfungswirkung.

Die Anordnung des mit Partikeln gefüllten Hohlraums im Bereich zwischen dem Austrittsgehäuse 21 des Verdichters und dem Filterschalldämpfer erhöht den Berstschutz (Containment). Sollte sich das Verdichterrad 10 von der Turbinenachse lösen oder gar in einzelne Bruchstücke zerbersten, so führt der radial ausserhalb des Strömungskanals im Ansaugbereich des Verdichterrades angeordnete, mit Partikeln gefüllte Hohlraum dazu, dass das Verdichterrad oder Bruchstücke davon, nicht in radialer Richtung das Gehäuse durchschlagen. Die grosse Massenträgheit der Partikelmasse absorbiert einen grossen Teil der Berstenergie durch innere Reibung der einzelnen Partikel. Somit lässt sich ein einfacher, aber effektiver Berstschutz realisieren, welcher sogar bei bestehenden Turboladern nachgerüstet werden kann, indem vorhandene Hohlräume mit Partikeln gefüllt und anschliessend abgedeckt werden.

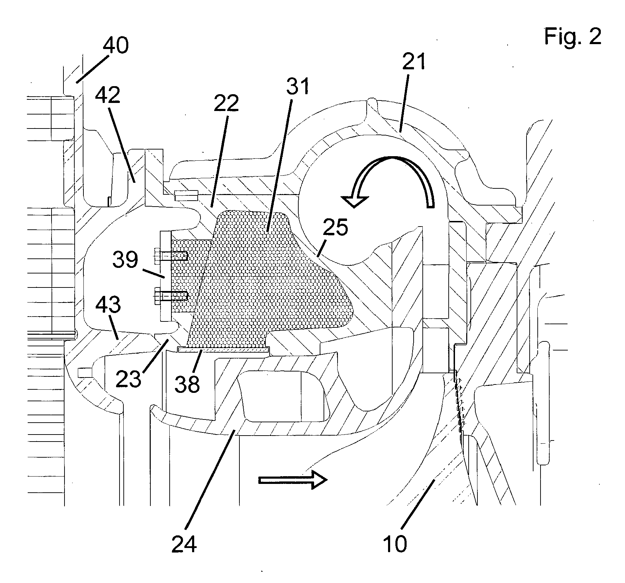

Fig. 2 zeigt die Ausführungsform nach Fig. 1 jedoch mit einem separaten Gehäuseeinsatz 25, welcher zwischen dem Austrittsgehäuse 21 und der Einsatzwand 24 eingeschoben ist. Der mit Partikeln gefüllte Hohlraum 31 befindet sich im Innern des Gehäuseeinsatzes zwischen dem 23 und dem an den Strömungskanal grenzenden Gehäuseteil. Der Hohlraumverschluss 39 ist wiederum als festgeschraubte Platte ausgebildet, welche eine in den Gehäuseeinsatz eingelassene Öffnung abdeckt. In der dargestellten Ausführungsform ist ein bestehender Hohlraum eines Verdichters mit Partikeln gefüllt, welcher mittels einer zusätzlichen ringförmigen Abdeckung 38 abgedichtet ist. Mittels solcher Hohlraumabdeckungen können Gehäusewölbungen zu geschlossenen, ringförmigen Hohlräumen umgebaut werden.

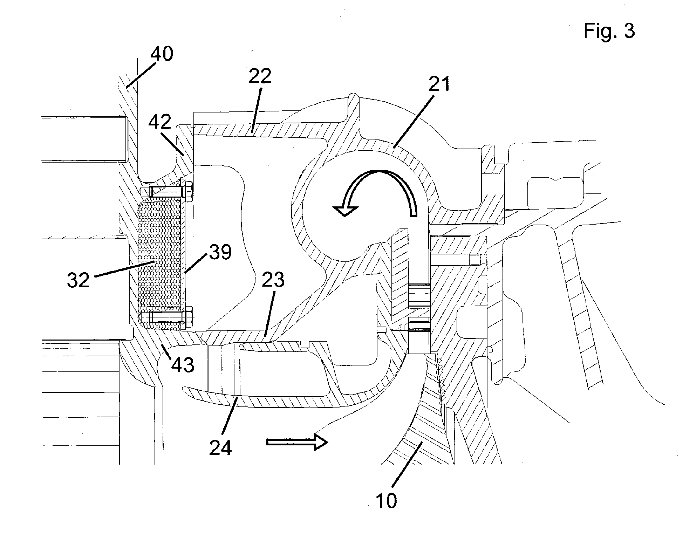

Fig. 3 zeigt eine Ausführungsform bei welcher der mit Partikeln gefüllte Hohlraum 32 am Gehäuse des Filterschaldämpfers 40 ausgebildet ist. Der Filterschalldämpfer umfasst ebenfalls zwei umlaufende Flansche 42 und 43, zwischen denen sich der umlaufende Hohlraum erstreckt, welcher mittels eines plattenförmigen Hohlraumverschlusses 39 verschlossen ist.

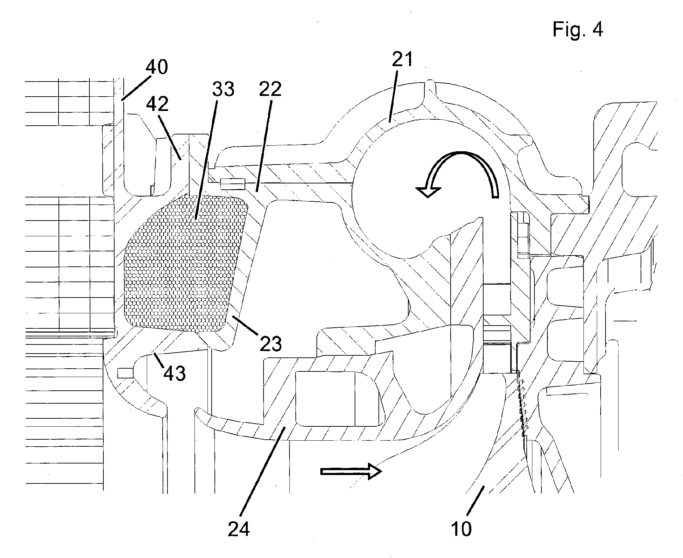

Fig. 4 zeigt eine Ausführungsform bei welcher sich der mit Partikeln gefüllte Hohlraum 33 zwischen den zusammengefügten Verdichtergehäuse 21 und Gehäuse des Filterschalldämpfers 40 erstreckt. Der Hohlraum wird dabei durch die radial innen und aussen angeordneten Flansche 22 und 42 bzw. 23 und 43 begrenzt. Die Füllung des Hohlraumes erfolgt durch eine separate, nicht dargestellte Öffnung, beispielsweise im Verbindungskragen des Flansches 42 zum Filterschaldämpfer 40, welche mittels eines Hohlraumverschlusses verschlossen werden kann.

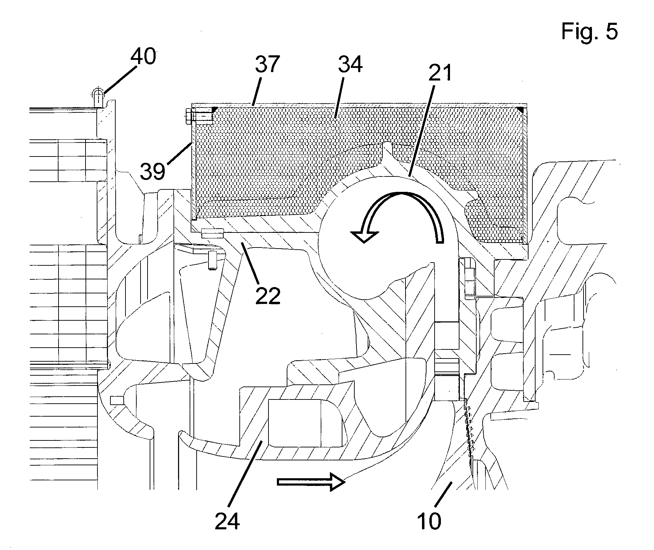

Fig. 5 zeigt eine Ausführungsform bei welcher der mit Partikeln gefüllte Hohlraum 34 das gesamte Verdichtergehäuse radial umschliesst. Radial innen ist der Hohlraum durch das Austrittsgehäuse 21 begrenzt. Radial aussen umschliesst ein Hohlraumgehäuse 37 den Hohlraum. Die Öffnung zum Abfüllen der Partikelmasse ins Innere des Hohlraumes ist an einer der axialen Stirnseiten des Hohlraums angeordnet und mittels eines plattenförmigen Hohlraumverschlusses verschlossen. Alternativ kann die Öffnung auch auf der Mantelfläche des Hohlraumgehäuses 37, also radial gegen aussen angeordnet sein. Das Hohlraumgehäuse 37 kann, wie dargestellt, zylindrisch mit einem rechteckigen Querschnitt ausgebildet sein, oder aber über einen teilkreis- oder teilellipsenförmigen Querschnitt verfügen.

Bei der Anordnung des mit Partikeln gefüllten Hohlraums im radial äusseren Bereich des Verdichtergehäuses gem. Fig. 5 verbessert sich die Wärme und Schallisolation, so dass auf eine konventionelle Wärme- und Schallisolation verzichtet werden kann.

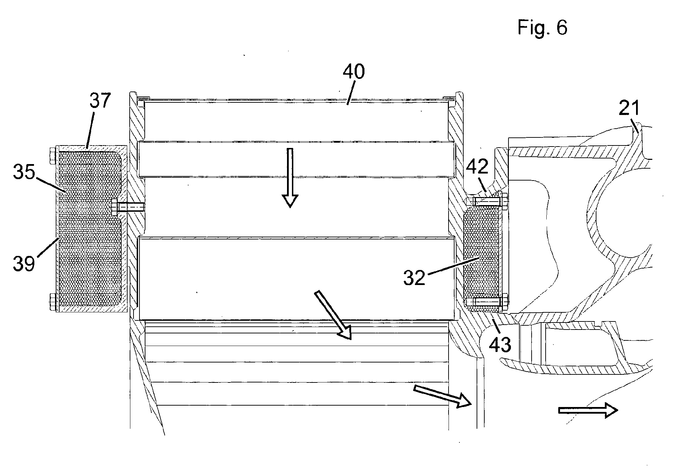

Fig. 6 zeigt die Ausführungsform nach Fig. 3, bei welcher ein mit Partikeln gefüllter Hohlraum 32 am Gehäuse des Filterschaldämpfers 40 ausgebildet ist, jedoch mit einem zusätzlichen mit Partikeln gefüllten Hohlraum 35 am gegenüberliegenden Ende des Filterschalldämpfers. Dieser zusätzliche Hohlraum kann als ein umlaufender evtl. mittels radialer Rippen unterteilter Ringhohlraum ausgebildet sein, oder mehrere separate ringsegmentförmige Boxen umfassen. In dieser Ausführungsform befindet sich der mit Partikeln gefüllte Hohlraum 35, also der Partikeldämpfer, in einer Zone mit grossen Schwingungsamplituden. Somit kann eine verstärkte Dämpfung erzielt werden. Dieser zusätzliche Partikeldämpfer kann als Modul optional d.h. alleine oder zusätzlich an den Filterschalldämpfer befestigt werden, falls etwa der integrierte Partikeldämpfer nicht ausreichen würden.

### Bezugszeichenliste

- 10: Verdichterrad
- 21: Austrittsgehäuse des Verdichtergehäuses
- 22: äusserer Befestigungsflansch des Verdichtergehäuses
- 23: innerer Befestigungsflansch des Verdichtergehäuses
- 24: Einsatzwand des Verdichtergehäuses
- 25: Gehäuseeinsatz des Verdichtergehäuses
- 31 bis 35: mit Partikeln gefüllter Hohlraum
- 37: Hohlraumgehäuse
- 38: Hohlraumabdeckung
- 39: Hohlraumverschluss
- 40: Filterschalldämpfer
- 42: äusserer Befestigungsflansch des Filterschalldämpfergehäuses
- 43: innerer Befestigungsflansch des Filterschalldämpfergehäuses

## Patentansprüche

1. Abgasturbolader, umfassend ein Gehäuse mit mindestens einem Hohlraum (31, 32, 33, 34, 35), **dadurch gekennzeichnet, dass** mindestens ein Hohlraum des Abgasturboladers als Partikelvibrationsdämpfer zumindest teilweise mit Partikeln gefüllt ist, wobei der Hohlraum ringförmig ausgebildet ist, und dass die Gehäusewände an der Innenseite des Hohlraums gehärtet oder aufgummiert sind.

2. Abgasturbolader gemäss Anspruch 1, **dadurch gekennzeichnet, dass** der Hohlraum (31, 32, 33, 34, 35) durch einen Hohlraumverschluss (39) begrenzt ist, und dass der Hohlraumverschluss (39) zum Einschütten von Partikeln in den Hohlraum geöffnet und anschliessend wieder verschlossen werden kann.

3. Abgasturbolader gemäss einem der Ansprüche 1 oder 2, **dadurch gekennzeichnet, dass** der Abgasturbolader einen Verdichter mit einem Ansaugbereich umfasst, und dass der Hohlraum (31, 32, 33, 34, 35) radial ausserhalb des Ansaugbereichs des Verdichters angeordnet ist.

4. Abgasturbolader gemäss einem der Ansprüche 1 bis 3, **dadurch gekennzeichnet, dass** der Abgasturbolader einen Verdichter und einen dem Verdichter benachbart angeordneten Filterschalldämpfer (40) umfasst, und dass der Hohlraum (32, 33, 35) durch den Filterschalldämpfer (40) begrenzt ist.

5. Abgasturbolader gemäss Anspruch 4, **dadurch gekennzeichnet, dass** der Hohlraum (33) zwischen dem Verdichter und dem Filterschalldämpfer angeordnet, und durch ein Gehäuse des Filterschalldämpfers (40, 42, 43) und ein Verdichtergehäuse (22, 23) begrenzt ist.

6. Abgasturbolader gemäss einem der Ansprüche 1 oder 2, **dadurch gekennzeichnet, dass** der Abgasturbolader einen Verdichter mit einem Ansaugbereich umfasst, und dass der Hohlraum (34) radial ausserhalb des Verdichters angeordnet ist.

7. Abgasturbolader gemäss Anspruch 6, **dadurch gekennzeichnet, dass** der Hohlraum (34) durch ein Hohlraumgehäuse (37) begrenzt ist, welches radial ausserhalb eines Verdichtergehäuses (21) angeordnet ist.

8. Abgasturbolader gemäss einem der Ansprüche 1 oder 2, **dadurch gekennzeichnet, dass** der Hohlraum (35) durch ein Hohlraumgehäuse (37) begrenzt ist, welches an einem Filterschalldämpfer (40) des Abgasturboladers befestigt ist.

9. Abgasturbolader gemäss einem der Ansprüche 1 bis 8, **dadurch gekennzeichnet, dass** den Partikeln Gummigranulat und/ oder Gummimehl beigemischt ist.

10. Abgasturbolader gemäss einem der Ansprüche 1 bis 9, **dadurch gekennzeichnet, dass** der Hohlraum mit Partikeln und einer Flüssigkeit gefüllt ist.

11. Abgasturbolader gemäss einem der Ansprüche 1 bis 10, **dadurch gekennzeichnet, dass** die die Partikel im wesentlichen kugelförmig oder sphärisch ausgebildet sind.

12. Abgasturbolader gemäss einem der Ansprüche 1 bis 11, **dadurch gekennzeichnet, dass** der Hohlraum aus mehreren, voneinander getrennten Ringsegmentteilen gebildet ist.

## Claims

1. Exhaust gas turbocharger, comprising a casing with at least one cavity, **characterized in that** at least one cavity of the exhaust gas turbocharger, as a particle vibration damper, is filled at least partially with particles, wherein the cavity is formed with an annular shape, and **in that** the casing walls on the inner side of the cavity are hardened or rubber-coated.

2. Exhaust gas turbocharger according to Claim 1, **characterized in that** the cavity is delimited by a cavity closure, and **in that** the cavity closure can be opened for pouring particles into the cavity, and can then be closed off again.

3. Exhaust gas turbocharger according to one of Claims 1 or 2, **characterized in that** the exhaust gas turbocharger comprises a compressor with an inlet section, and **in that** the cavity is arranged radially outside the inlet section of the compressor.

4. Exhaust gas turbocharger according to one of Claims 1 to 3, **characterized in that** the exhaust gas turbocharger comprises a compressor and a filter silencer which is arranged adjacent to the compressor, and **in that** the cavity is delimited by the filter silencer.

5. Exhaust gas turbocharger according to Claim 4, **characterized in that** the cavity is arranged between the compressor and the filter silencer, and is delimited by a housing of the filter silencer and a compressor casing.

6. Exhaust gas turbocharger according to one of Claims 1 or 2, **characterized in that** the exhaust gas turbocharger comprises a compressor with an inlet section, and **in that** the cavity is arranged radially outside the compressor.

7. Exhaust gas turbocharger according to Claim 6, **characterized in that** the cavity is delimited by a cavity housing which is arranged radially outside a compressor casing.

8. Exhaust gas turbocharger according to one of Claims 1 or 2, **characterized in that** the cavity is delimited by a cavity housing which is fastened on a filter silencer of the exhaust gas turbocharger.

9. Exhaust gas turbocharger according to one of Claims 1 to 8, **characterized in that** rubber granulate and/or rubber dust is admixed with the particles, and/or **in that** the cavity is filled with particles and a liquid.

10. Exhaust gas turbocharger according to one of Claims 1 to 9, **characterized in that** the cavity is filled with particles and a liquid.

11. Exhaust gas turbocharger according to one of Claims 1 to 10, **characterized in that** the particles are formed essentially with a globular or spherical shape.

12. Exhaust gas turbocharger according to one of Claims 1 to 11, **characterized in that** the cavity is formed from a plurality of annular segment sections which are separated from each other.

## Revendications

1. Turbocompresseur entraîné par gaz d'échappement, comprenant un boîtier doté d'au moins une cavité (31, 32, 33, 34, 35),
**caractérisé en ce que**
au moins une cavité du turbocompresseur entraîné par gaz d'échappement est au moins partiellement remplie de particules pour former un amortisseur de vibrations à particules, la cavité étant de forme annulaire, et
**en ce que** les parois du boîtier sont durcies ou caoutchoutées sur le côté intérieur de la cavité.

2. Turbocompresseur entraîné par gaz d'échappement selon la revendication 1, **caractérisé en ce que** la cavité (31, 32, 33, 34, 35) est délimitée par une fermeture (39) de cavité et **en ce que** la fermeture (39) de cavité peut être ouverte pour verser des particules dans la cavité et peut ensuite être refermée.

3. Turbocompresseur entraîné par gaz d'échappement selon l'une des revendications 1 ou 2, **caractérisé en ce que** le turbocompresseur entraîné par gaz d'échappement comporte un compresseur doté d'une partie d'aspiration et **en ce que** la cavité (31, 32, 33, 34, 35) est disposée radialement à l'extérieur de la partie d'aspiration du compresseur.

4. Turbocompresseur entraîné par gaz d'échappement selon l'une des revendications 1 à 3, **caractérisé en ce que** le turbocompresseur entraîné par gaz d'échappement comporte un compresseur et un amortisseur (40) de bruits de filtre disposé au voisinage du compresseur et **en ce que** la cavité (32, 33, 35) est délimitée par l'amortisseur (40) de bruits de filtre.

5. Turbocompresseur entraîné par gaz d'échappement selon la revendication 4, **caractérisé en ce que** la cavité (33) est disposée entre le compresseur et l'amortisseur de bruits de filtre et est délimitée par un boîtier de l'amortisseur (40, 42, 43) de bruits de filtre et un boîtier du compresseur (22, 23).

6. Turbocompresseur entraîné par gaz d'échappement selon l'une des revendications 1 ou 2, **caractérisé en ce que** le turbocompresseur entraîné par gaz d'échappement comporte un compresseur doté d'une partie d'aspiration et **en ce que** la cavité (34) est disposée radialement à l'extérieur du compresseur.

7. Turbocompresseur entraîné par gaz d'échappement selon la revendication 6, **caractérisé en ce que** la cavité (34) est délimitée par un boîtier (37) de cavité disposé radialement à l'extérieur d'un boîtier de compresseur (21).

8. Turbocompresseur entraîné par gaz d'échappement selon l'une des revendications 1 ou 2, **caractérisé en ce que** la cavité (35) est délimitée par un boîtier (37) de cavité qui est fixé sur un amortisseur (40) de bruits de filtre du turbocompresseur entraîné par gaz d'échappement.

9. Turbocompresseur entraîné par gaz d'échappement selon l'une des revendications 1 à 8, **caractérisé en ce qu'**un granulé de caoutchouc et/ou de la farine de caoutchouc sont mélangés aux particules.

10. Turbocompresseur entraîné par gaz d'échappement selon l'une des revendications 1 à 9, **caractérisé en ce que** la cavité est remplie de particules et d'un liquide.

11. Turbocompresseur entraîné par gaz d'échappement selon l'une des revendications 1 à 10, **caractérisé en ce que** les particules ont essentiellement la forme de billes ou de sphères.

12. Turbocompresseur entraîné par gaz d'échappement selon l'une des revendications 1 à 11, **caractérisé en ce que** la cavité est formée de plusieurs segments annulaires distincts les uns des autres.
